(19) Europäisches Patentamt / European Patent Office / Office européen des brevets

(11) **EP 3 974 924 A1**

(12) **EUROPÄISCHE PATENTANMELDUNG**

(43) Veröffentlichungstag:
**30.03.2022 Patentblatt 2022/13**

(21) Anmeldenummer: **20198969.6**

(22) Anmeldetag: **29.09.2020**

(51) Internationale Patentklassifikation (IPC):
**G05B 19/4065** (2006.01)   **B23Q 17/00** (2006.01)

(52) Gemeinsame Patentklassifikation (CPC):
**G05B 19/4065;** B23Q 17/003; G05B 2219/37229

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Energy Global GmbH & Co. KG**
**81739 München (DE)**

(72) Erfinder:
• **Knappe, Dominik**
 **52068 Aachen (DE)**
• **Waschew, Arthur**
 **52074 Aachen (DE)**

(54) **VERFAHREN ZUR OFFLINE UND/ODER ONLINE IDENTIFIKATION EINES ZUSTANDES EINER WERKZEUGMASCHINE, ZUMINDEST EINES IHRER WERKZEUGE ODER ZUMINDEST EINES DARIN BEARBEITETEN WERKSTÜCKS**

(57)  Die Erfindung betrifft ein Verfahren (100) zur offline und/oder online Identifikation eines Zustandes einer Werkzeugmaschine (WM), zumindest eines ihrer Werkzeuge (WZ) oder zumindest eines darin bearbeiteten Werkstücks (WS), bei der die Werkzeugmaschine (WM) Sensoren aufweist, mit denen zumindest die Position des Werkzeugs und/oder des Werkzeughalters orts- und zeitaufgelöst erfassbar ist ein, umfassend die Schritte:
a) zu einer Serie von Zeitpunkten i, i=l...n Erfassen oder Bereitstellen (102) von Positionen P des Werkzeugs und/oder eines Werkzeughalters (WH$_1$, WH$_2$),
b) Ermitteln (104) für die Serie von Zeitpunkten i
b1) eine Serie von Positionsänderungen $\Delta m_i$ gemäß

$$\Delta m_i = \frac{P_i}{P_{i-1}}$$

und
b2) eine Serie von Geschwindigkeitsänderungen $\Delta v_i$

$$\Delta v_i = \frac{v_i}{v_{i-1}}$$

mit

$$v_i = \frac{P_i - P_{i-1}}{t_i - t_{i-1}} \quad \text{und} \quad v_{i-1} = \frac{P_{i-1} - P_{i-2}}{t_{i-1} - t_{i-2}}$$

c) Identifizieren (110) des Zustands
c1) des Werkzeugs (WZ),
c2) des Werkzeughalters (WH$_1$, WH$_2$),
c3) der Werkzeugmaschine (WM) und/oder
c4) des in der Werkzeugmaschine (WM) bearbeiteten Werkstücks (WS) anhand der Positionsänderungen $\Delta m_i$ und der Geschwindigkeitsänderungen $\Delta v_i$.

FIG 2

**Beschreibung**

Die Erfindung betrifft ein Verfahren zur offline und/oder online Identifikation eines Zustandes einer Werkzeugmaschine, zumindest eines ihrer Werkzeuge oder zumindest eines darin bearbeiteten Werkstücks, bei der die Werkzeugmaschine zumindest eine, vorzugsweise drehbare Einspannvorrichtung zum Einspannen eines zu bearbeitenden Werkstücks und zumindest einen verfahrbaren Werkzeughalter zum Positionieren eines darin gehaltenen Werkzeugs, mit dem das Werkstück bearbeitet werden kann, und Sensoren aufweist, mit denen zumindest die Position des Werkzeugs und/oder des Werkzeughalters orts- und zeitaufgelöst erfassbar ist.

Werkzeugmaschinen, beispielsweise CNC-Maschinen, sind heutzutage mit einer Vielzahl von Sensoren ausgestattet, die unterschiedlichste Betriebsparameter kontinuierlich erfassen können. Die damit ermittelten Zeitreihen für die Betriebsparameter ermöglichen eine Analyse des Betriebszustands der Werkzeugmaschine. So ist es beispielsweise aus der WO 2020/038815 A1 bekannt, den Zustand einer Vorrichtung unter Verwendung einer trainierten Support-Vector-Maschine zu bestimmen. Dabei wird ein Betriebsparameterraum in Klassifizierungsvolumina unterteilt, von denen zumindest einer ein Normalzustand und zumindest ein anderer ein Fehlerzustand der Vorrichtung identifiziert.

Nachteilig ist, dass es zur Umsetzung einerseits an einem neuronalen Netz und andererseits an umfangreichen Trainingsdaten bedarf, sodass im Stand der Technik ein komplexes Verfahren bereitgestellt wird.

Zudem lassen sich mit dem vorbekannten Verfahren unterschiedliche Normalbetriebszustände einer Werkzeugmaschine nur aufwändig bestimmen. Normalbetriebszustände sind solche Betriebszustände, bei denen die Werkzeugmaschine die vorbestimmten, d. h. programmierten Verfahrensschritte bestimmungsgemäß und ohne Fehler durchführt. Zu den Normalbetriebszuständen einer Werkzeugmaschine gehören grundsätzlich als Hauptzustand der Zerspanprozess sowie als Nebenzustände beispielsweise der Rücklauf, Fahrten des Werkzeughalters für einen Werkzeugwechsel, Stillstandszeiten oder simple Leerläufe.

Mithin bestehen derzeit nur beschränkte Möglichkeiten, unrentable Nebenzeiten zu ermitteln und detailliert zu analysieren. Weiterhin können einzelne Sequenzen von einem der Elemente nicht eindeutig bzw. fehlerfrei identifiziert werden. Dabei wird unter einem Element der Werkzeugmaschine ein Bestandteil der Werkzeugmaschine verstanden, welches in der Werkzeugmaschine bewegt werden kann. Mithin ist der Begriff Element in dieser Anmeldung ein Sammelbegriff, worunter im Detail das Werkzeug bzw. die Werkzeuge, deren Werkzeughalter und die Einspannvorrichtung zum Einspannen des Werkstücks verstanden werden kann.

Zwar kann bei einer Prüfung des Betriebszustandes auf Grundlage interner Maschinensignale zwischen Betrieb und Stillstand der Werkzeugmaschine unterschieden werden. Dies wird durch die Leistungsaufnahme der Antriebsmotoren und sich ändernde Positionsdaten des Werkzeughalters bzw. des Werkzeugs realisiert. Nebenzeiten jedoch werden bisher nur abgeschätzt oder manuell an der Maschine aufgenommen. Für eine detaillierte und vollständige Beschreibung des Betriebszustandes wird eine kontinuierliche Dokumentation aller Ereignisse benötigt.

Insofern ist es Aufgabe der Erfindung ein Verfahren zur offline und/oder online Identifikation eines Zustands oder einer Sequenz einer Werkzeugmaschine, wie beispielsweise einer CNC-Werkzeugmaschine bereitzustellen, mit der sich die Betriebszustände bzw. die Sequenzen in einfacher und effizienter Art und Weise identifizieren lassen. Gleichzeitig ist es Aufgabe der Erfindung, eine dazu entsprechende Vorrichtung anzugeben.

Diese Aufgaben werden durch die Gegenstände der unabhängigen Ansprüche gelöst. Vorteilhafte Ausgestaltungen der Erfindung sind Gegenstand der weiteren Patentansprüche sowie der nachfolgenden Beschreibung.

Erfindungsgemäß ist der Betriebszustand einer Werkzeugmaschine oder eine Sequenz einer Fahrt, zumindest eines ihrer Werkzeuge oder zumindest eines darin bearbeiteten Werkstücks identifizierbar. Die Werkzeugmaschine weist zumindest eine vorzugsweise drehbare Einspannvorrichtung zum Einspannen eines zu bearbeitenden Werkstücks und zumindest einen verfahrbaren Werkzeughalter zum Positionieren eines darin gehaltenen Werkzeugs, mit dem das Werkstück bearbeitet werden kann, und Sensoren auf, mit denen zumindest die Position des Werkzeugs und/oder des Werkzeughalters orts- und zeitaufgelöst erfassbar ist. Zur erfindungsgemäßen Identifizierung werden die nachfolgenden Schritte durchgeführt.

Zuerst werden zu einer Serie von aufeinanderfolgenden Zeitpunkten i, mit i= 1...n die Positionen P des Werkzeugs und/oder des Werkzeughalters orts- und zeitaufgelöst von den Sensoren erfasst. Diese Zeitreihen von Daten können sodann unmittelbar nach der Erfassung, also online, gemäß der Schritte b) und c) ausgewertet werden. Ebenso ist es möglich, das erfindungsgemäße Verfahren gemäß der Schritte b) und c) zur Analyse bereits abgeschlossener Betriebsphasen der Werkzeugmaschine zu verwenden. In diesem Fall werden die während dieser Betriebsphasen erfassten und somit historischen Daten dem hier beschriebenen Auswerteverfahren nachträglich, also offline, bereitgestellt.

Die als Zeitreihen zu den Zeitpunkten i vorliegenden Daten der Sensoren zu den Positionen des Werkzeugs und/oder des Werkzeughalters, werden jeweils
in einem ersten Berechnungsschritt gemäß

$$\Delta m_i = \frac{P_i}{P_{i-1}} \qquad \text{eq.(1)}$$

in eine Serie von Positionsänderungen $\Delta m_i$ und gemäß

$$\Delta v_i = \frac{v_i}{v_{i-1}} \qquad \text{eq.(2)}$$

mit

$$v_i = \frac{P_i - P_{i-1}}{t_i - t_{i-1}} \quad \text{und} \quad v_{i-1} = \frac{P_{i-1} - P_{i-2}}{t_{i-1} - t_{i-2}} \qquad \text{eq.(3) und eq.(4)}$$

und

$$v_i = \frac{P_i - P_{i-1}}{t_i - t_{i-1}} \quad \text{und} \quad v_{i-1} = \frac{P_{i-1} - P_{i-2}}{t_{i-1} - t_{i-2}} \qquad \text{eq.(3) und eq.(4)}$$

in eine Serie von Geschwindigkeitsänderungen $\Delta v_i$ umgewandelt.

Aus diesen Datenserien lässt sich sodann der Zustand des Werkzeugs, des Werkzeughalters, der Werkzeugmaschine und/oder des in der Werkzeugmaschine bearbeiteten Werkstücks ermitteln.

Das Besondere liegt in der Einfachheit des angegebenen Verfahrens, welches weder eine komplexe Transformation der ermittelten bzw. bereitgestellten Sensordaten noch das Trainieren eines wie auch immer gestalteten neuronalen Netzes erfordert.

Gemäß einer besonders bevorzugten Ausgestaltung des Verfahrens werden die Positionen P als Koordinaten $P_i$ ($x_i$, $y_i$, $z_i$) eines kartesischen Koordinatensystems erfasst, abgespeichert und dem Auswerteverfahren bereitgestellt. Somit kann entsprechend der Achsen x, y, z des Koordinatensystems für die Positionsänderungen $\Delta m_i$ ihre jeweiligen Komponenten $\Delta m_{xi}$, $\Delta m_{yi}$, $\Delta m_{zi}$ und für die Geschwindigkeitsänderungen $\Delta v_i$ ihre jeweiligen Komponenten $\Delta v_{xi}$, $\Delta v_{yi}$, $\Delta v_{zi}$ bestimmt werden. Ein derartiges Verfahren basiert dann auf dem von der Werkzeugmaschine ohnehin verwendeten Koordinatensystem, sodass eine Anpassung der von der Werkzeugmaschine erfassten Sensordaten nicht erforderlich ist. Dies unterstützt eine Bestimmung des Betriebszustandes in Echtzeit und ermöglicht eine einfachere Umsetzung des Verfahrens.

Besonders bevorzugt ist der identifizierte Zustand ein Betriebszustand, insbesondere ein Normalbetriebszustand, der eine Bewegung des Werkzeugs bzw. Werkzeughalters, insbesondere zur Werkstückbearbeitung, zur Werkzeugneupositionierung, insbesondere Rückläufern, zum Werkzeugwechsel sowie eine Ruhephase des Werkzeugs bzw. Werkzeughalters, insbesondere eine Stillstandzeit und/oder einen Leerlauf repräsentiert und/oder eine Abweichung von einer vorgegebenen Bewegungsgeschwindigkeit der Einspannvorrichtung, insbesondere Override-Befehlen, darstellt. Außerdem lassen sich mit dem Verfahren einzelne Betriebszustände, wenn es sich um Fahrten handelt, in mehrere Sequenzen mit unterschiedlicher Bedeutung aufteilen. Hierunter wird insbesondere verstanden, dass der Zustand "Zerspanprozess" in die Sequenzen "Heranfahren", "Anschnitt" im Sinne von "das Werkzeug erreicht und kontaktiert das Werkstück", "Schnittsequenz" im Sinne von "das Werkzeug bearbeitet das Werkstück" und "Abschnitt" im Sinne von "das Werkzeug verliert den Kontakt zum Werkstück" unterteilbar ist. Für andere Fahrten und Bewegungen der Elemente gilt dies ebenso.

Vorteilhafterweise erfassen weitere Sensoren elektrische Parameter der Antriebsmotoren der Werkzeugmaschine. Beispielsweise erfassen die weiteren Sensoren die elektrische Stromaufnahme und/oder die anliegende elektrische Versorgungsspannungen der Antriebsmotoren, mittels denen beispielsweise die Einspannvorrichtung gedreht und/oder die Werkzeughalter im Raum bewegt werden. Die dadurch ermittelten Kennlinien und/oder Zeitreihen sind sodann in einem weiteren Verfahrensschritt analysierbar. Beispielsweise werden diese Kennlinien oder Zeitreihen mit den zuvor ermittelten Serien an Positionsänderungen und Geschwindigkeitsänderungen kombiniert, sodass insbesondere eine Analyse der Zerspanprozesse möglich ist. Auch können hieraus Fehler-Betriebszustände ermittelt werden. Derartige Erkenntnisse ermöglichen einerseits den Schutz der Werkzeugmaschine vor Folgeschäden. Andererseits können Beschädigungen am Werkstück erkannt und gemeldet werden, sodass eine zeitnahe Überprüfung des noch unfertigen Werkstücks möglich ist. Hierdurch kann eine unnötige Weiterbearbeitung eines ggf. nicht mehr nutzbaren Werkstücks vermieden werden, was den Nutzungsgrad der Werkzeugmaschine verbessert, Kosten einspart und die Fertigstellung einer Serie von Werkstücken beschleunigt.

Zweckmäßigerweise werden weitere Daten, insbesondere Korrekturfaktoren oder Werkzeugparameter zur Ermittlung der Zustände vorab bereitgestellt und verwendet. Korrekturfaktoren sind beispielsweise solche Werte, die zur exakten Positionsbestimmung der Schneidkante eines Werkzeugs genutzt werden.

In einem vorteilhaften Verfahrensschritt werden die Serie der Positionsänderungen und/oder die Serie der Geschwindigkeitsänderungen anhand einer Grenzwertbetrachtung analysiert. So lässt sich beispielsweise mithilfe der Formel

$$Lim_{v_f} = \frac{\sum_{i=1}^{n} U_{v,f}(i)}{n} \pm \frac{\sqrt{\frac{\sum_{i=1}^{n}(U_{v,f}(i)-\overline{U_{v,f}(i)})^2}{n-1}}}{2}, \qquad \text{eq. (5)}$$

wobei U eine Matrix die Position des Werkzeugs bzw. des Werkzeughalters beschreibt, ermitteln, ob entweder ein Werkzeugwechsel oder ein Zerspanprozess vorliegt.

Eine einfache und effiziente Art der Identifizierung der Zustände ist gegeben, wenn Fallunterscheidungen getroffen werden, bei denen überprüft wird, ob der betreffende Wert für die Positionsänderung $\Delta m_i$ und/oder die Geschwindigkeitsänderung $\Delta v_i$, oder eine bzw. mehrerer ihrer Komponenten kleiner 1, gleich 1, größer 1 oder 0 ist bzw. sind.

Zweckmäßigerweise werden die Serien der Positionsänderungen und/oder der Geschwindigkeitsänderungen in einem Diagramm als Kennlinien dargestellt und/oder in einem Daten-Array bereitgestellt, anhand dessen eine Analyse des jeweiligen Zustands erfolgt.

Besonders bevorzugt wird das Verfahren zur Erkennung einer Überlastung eines der Antriebe der Werkzeugmaschine, zur Erkennung von Verschleiß an der Werkzeugmaschine bzw. am Werkzeug, zur Erkennung eines Herstellungs- oder Werkstück-Fehlers und/oder zur Erkennung von Prozessinstabilitäten, insbesondere von Rattern, d.h. einem Regenerativeffekt, verwendet.

Zweckmäßigerweise ist das voran beschriebene Verfahren bzw. sind dessen bevorzugte Ausgestaltungen computer-implementiert. Demzufolge umfasst die Erfindung auch eine Vorrichtung zur Datenverarbeitung, umfassend Mittel zur Ausführung des Verfahrens oder zur Ausführung einer bevorzugten Ausgestaltung. Weiter umfasst die Erfindung auch ein Computerprogrammprodukt, umfassend Befehle, die bei der Ausführung des Programms durch einen Computer diesen veranlassen, die Schritte des Verfahrens oder einer bevorzugten Ausgestaltung auszuführen. Zur Erfindung gehört ebenso ein computerlesbares Medium, umfassend Befehle, die bei der Ausführung durch einen Computer diesen veranlassen, die Schritte des Verfahrens oder einer bevorzugten Ausgestaltung auszuführen.

Die bisher gegebene Beschreibung bevorzugter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit den erfindungsgemäßen Verfahren, der erfindungsgemäßen Vorrichtung zur Datenverarbeitung sowie dem erfindungsgemäßen computerlesbaren Medium kombinierbar. Ferner können Verfahrensmerkmale auch als Eigenschaft einer entsprechenden Vorrichtungseinheit angesehen werden.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Figuren näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:

Figur 1    in schematischer Darstellung eine Werkzugmaschine,
Figur 2    den Arbeitsraum der in Figur 1 gezeigten Werkzeug-maschine,
Figur 3    ein Ablaufdiagramm für das Verfahren zur Identifizierung von Zuständen einer Werkzeugmaschine,
Figur 4    das Diagramm eines Zerspanprozesses,
Figur 5    eine Matrix U mit einer Serie von Positionsänderungen.
Figur 6    eine Kennlinie des momentbildenden Stroms der z-Achse für den gesamten Bearbeitungsprozess eines Wertstücks und
Figur 7    eine Kennlinie für den Antriebsmoment der Hauptspindel bei einer einzelnen Bearbeitung.

In allen Figuren werden identische Merkmale mit den gleichen Bezugszeichen versehen.

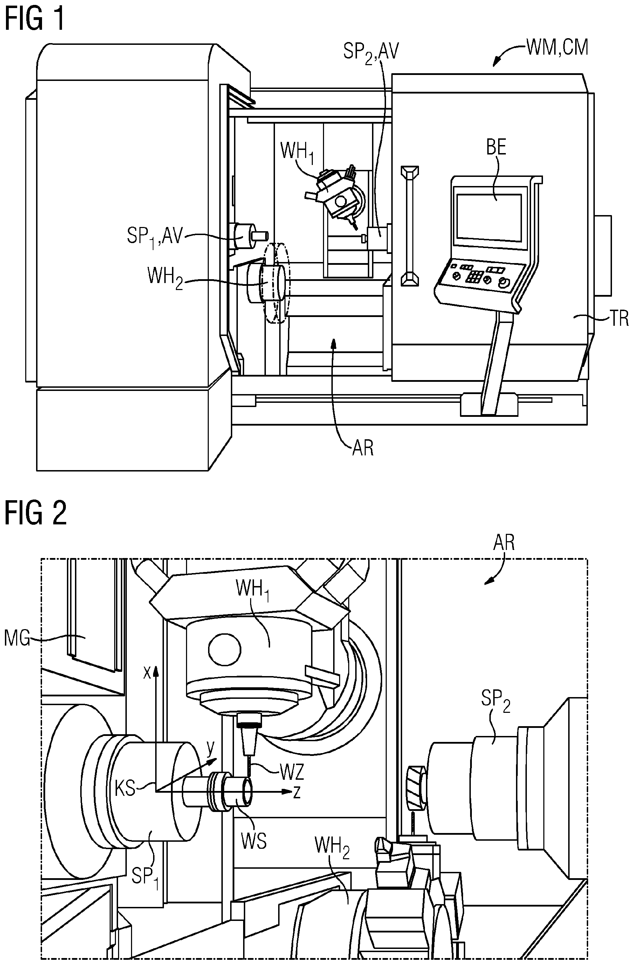

Figur 1 zeigt beispielhaft als eine Werkzeugmaschine WM eine Dreh-Fräs-CNC-Maschine CM. Die Werkzeugmaschine WM umfasst einen von einer Schiebetür TR verschließbaren Arbeitsraum AR, in dem zwei einander gegenüberliegende Spindeln SP, eine Hauptspindel $SP_1$ und eine Nebenspindel $SP_2$, als Einspannvorrichtungen AV, AV zum Einspannen eines zu bearbeitenden Werkstücks WS (Figur 2) vorgesehen sind. Im Arbeitsraum AR sind zudem zwei verfahrbare Werkzeughalter $WH_1$, $WH_2$ vorgesehen, die jeweils mehrere, hier nicht dargestellte Werkzeuge aufnehmen können. Weiter umfasst die Werkzeugmaschine WM ein Steuerungssystem BE zur Programmierung, Steuerung sowie Überwachung ihrer Elemente.

Den Arbeitsraum AR und die darin angeordneten Elemente zeigt sodann Figur 2 im Detail. Die beiden Spindeln $SP_1$ und $SP_2$ sind zueinander konzentrisch und um ihre gemeinsame Längsachse drehbar angeordnet. Sie umfassen zudem jeweils eine Einspannvorrichtung AV, mit denen ein zu bearbeitendes Werkstück WS gedreht werden kann. Weiter besitzt die Werkzeugmaschine WM zwei Werkzeughalter $WH_1$ und $WH_2$, die räumlich, in alle drei Raumrichtungen verschieblich sind. Der obere Werkzeughalter $WH_1$ umfasst als Motor-Fräs-Spindel lediglich drei Stationen, wohingegen der unten angeordnete Werkzeughalter $WH_2$ als Werkzeugrevolver mit mehreren Stationen ausgestaltet ist.

Zur Erfassung der Positionen verwendet das Steuerungssystem BE der Werkzeugmaschine WM ein virtuelles kartesisches Koordinatensystem KS mit den drei jeweils orthogonal zueinanderstehenden Maschinenachsen x, y, und z. Die beiden Spindeln $SP_1$ und $SP_2$ sowie die daran angeordneten Einspannvorrichtungen AV sind sowohl um die z-Achse drehbar als auch entlang der z-Achse derart verschieblich, dass Werkstücke ohne Unterstützung durch einen Benutzer von der Nebenspindel der Hauptspindel, oder umgekehrt, übergeben werden kann.

An den Arbeitsraum AR grenzt ein Magazinraum MG an, der in der gezeigten Darstellung von einer Magazintür verschlossen ist. Im Magazinraum MG ist eine größere Anzahl an Werkzeugen WZ, d. h. Bohrer, Fräsern und dergleichen, angeordnet die von dem oberen Werkzeughalter $WH_1$ bei offener Magazintür gegriffen und darin zurückgelegt oder zurückgeben werden können.

Die Werkzeugmaschine WM kann während ihres Betriebes sich in unterschiedlichen Zuständen, sprich Betriebszuständen, befinden. Hier ist zu unterschieden zwischen fehlerhaften Betriebszuständen einerseits und bestimmungsgemäßen Betriebszuständen, so genannten Normalbetriebszuständen, andererseits. Ein Beispiel für einen fehlerhaften Betriebszustand ist der Zustand "Werkzeugbruch". Andere einen Fehler indizierende Betriebszustände sind denkbar. Dagegen können bestimmungsgemäße Betriebszustände beispielsweise "Zerspanprozess", "Leerlauf", "Override-Befehl" oder auch "Werkzeugwechsel" darstellen. Unter einem Override-Befehl wird ein manueller Eingriff durch einen Benutzer der Werkzeugmaschine WM verstanden, die den programmierten Ablauf einer Werkstückbearbeitung beschleunigt oder verzögert. Weitere bestimmungsgemäße Betriebszustände können auch Sequenzen der vorgenannten Betriebszustände sein, wenn quasi Teilabschnitte davon erkannt werden (sollen). Mittels der durch das Verfahren erkannten Betriebszuständen ist anschließend eine Analyse und ggf. eine Optimierung der Bearbeitung des Werkstücks WS möglich.

Auch das Werkstück kann in unterschiedlichen Zuständen vorliegen. Bezugnehmend auf das Werkstück WS ist mittels des Verfahrens beispielsweise eine ortsaufgelöste Identifikation von möglichen Fertigungsfehlern zur Reduktion des Aufwandes zur Qualitätssicherung möglich.

Zur Ermittlung der Zustände ist die Werkzeugmaschine WM mit einer Vielzahl von nicht dargestellten Sensoren ausgestattet. Mit einigen dieser Sensoren sind die Positionen des Werkzeugs und/oder der Werkzeughalter oder auch der Einspannvorrichtungen orts- und zeitaufgelöst ermittelbar. Meist erfolgt die Erfassung der Position, d. h. der Raumkoordinaten P(x, y, z) der Einspannvorrichtungen AV bzw. des darin eingespannten Werkstück WS, des Werkzeugs WZ bzw. der Werkzeughalter $WH_1$, $WH_2$ für jede Maschinenachse separat durch entsprechend geeignete Sensoren.

Auch können beispielsweise die Position der Schneidkanten der Werkzeuge WZ über die Position der Werkzeughalter ermittelt werden, indem die Werkzeughalterposition um vorab bereitgestellte Daten über die Größe des betreffenden Werkzeugs ergänzt wird. Ebenso ist es möglich zur Ermittlung von Korrekturdaten die Position der Schneidkanten des Werkzeugs in der Werkzeugmaschine WM automatisch zu vermessen. Weitere Sensoren sind in der Lage, die elektrischen Ströme und Versorgungsspannungen der (nicht dargestellten) Antriebsmotoren der Werkzeugmaschine kontinuierlich zu erfassen, mit denen die jeweiligen drehbaren und/oder verschiebbaren Elemente angetrieben, d. h. gedreht und/oder umpositioniert werden kann.

Insofern beinhalten die Signale dieser Sensoren Daten, wie während Maschinenstillständen, Werkzeugwechsel, Leerläufen, Eilgangsfahrten, Beschleunigungseffekte, der Sequenz Anschnitt sowie des eigentlichen Zerspanprozesses erfasst können. Die aufgenommenen Datensignale repräsentieren somit unter anderem Positionsdaten, Antriebsparameter und - leistungen, Korrekturfaktoren oder Werkzeugparameter.

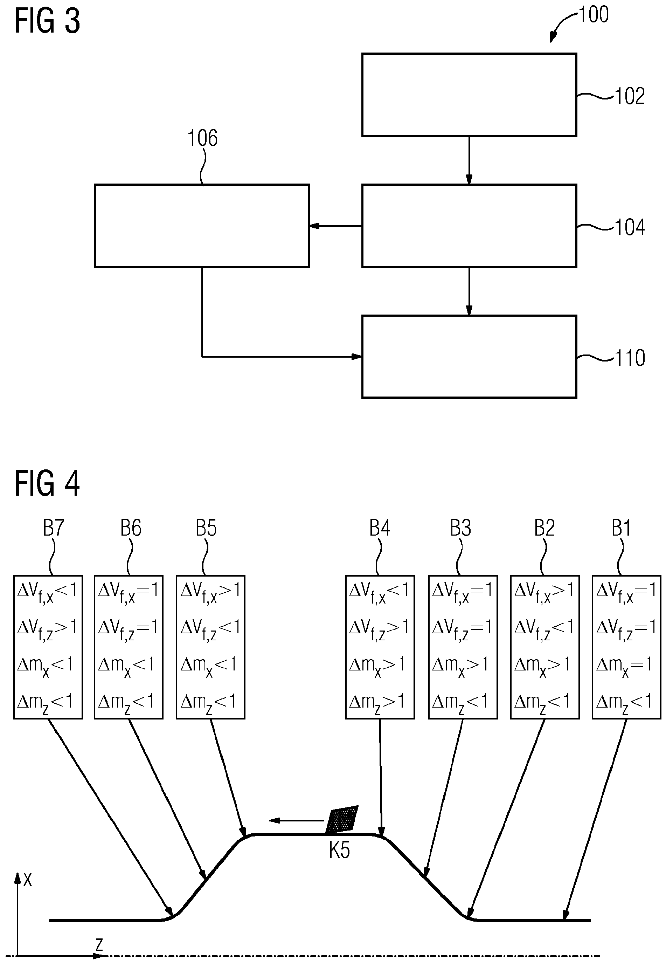

Das zur Identifizierung von Zuständen vorgeschlagene Verfahren ist in Figur 3 schematisch dargestellt, wobei im Folgenden weitere zur Charakterisierung notwendige Begrifflichkeiten definiert werden:

Die Vorschubgeschwindigkeit eines Elements berechnet sich aus dem Produkt des vorliegenden Vorschubes (f) entlang der betrachteten Maschinenachse und der zugehörigen Drehzahl n, nachfolgend lediglich beispielhaft für die x-Achse dargestellt:

$$v_{f,x} = f_x * n \qquad\qquad (1)$$

Für die zur Zustandsidentifizierung benötigte Positionsänderung des betrachteten Elements sei der Vektor Δm eingeführt, definiert aus dem Verhältnis, d.h. Quotienten, seiner Position zu einem beliebigen Zeitpunkt i zu seiner vorherigen Position, also zum Zeitpunkt i-1. Exemplarisch ist dies in Gl. 2 für die x-Koordinate des betreffenden Elements gezeigt.

$$\Delta m_x = \frac{x(i)}{x(i-1)} \qquad\qquad (2)$$

Die Methode bietet die Möglichkeit, das Verfahren offline und online einsetzten zu können.

Weiterhin gilt für die Vorschubgeschwindigkeitsänderung in beispielsweise x-Richtung der in Gl. 3 dargestellte Zusammenhang:

$$\Delta v_{f,x} = \frac{v_{f,x}(i)}{v_{f,x}(i-1)} \qquad\qquad (3)$$

wobei die Geschwindigkeiten ermittelt werden gemäß

$$v_i = \frac{P_i - P_{i-1}}{t_i - t_{i-1}} \quad \text{und} \quad v_{i-1} = \frac{P_{i-1} - P_{i-2}}{t_{i-1} - t_{i-2}} \qquad\qquad (4), \ (5).$$

und

$$v_i = \frac{P_i - P_{i-1}}{t_i - t_{i-1}} \quad \text{und} \quad v_{i-1} = \frac{P_{i-1} - P_{i-2}}{t_{i-1} - t_{i-2}} \qquad\qquad (4), \ (5).$$

In einem ersten Verfahrensschritt 102 des erfindungsgemäßen Verfahrens 100 werden zu einer Serie von Zeitpunkten die jeweils aktuelle Position des Werkzeugs WZ und/oder des Werkzeughalters WH$_1$, WH$_2$ erfasst bzw. als Daten bereitgestellt. Die in einem zweiten Verfahrensschritt 104 erfolgende Verarbeitung dieser Daten gemäß den vorstehenden Gleichungen (1) - (5) kann unmittelbar bei ihrer Entstehung erfolgen, was eine online-Identifikation des Zustands ermöglicht. Bei einer zur Erfassung der Daten zeitlich versetzten Berechnung und Zustandsidentifizierung ist von einer offline-Identifikation des Zustands die Rede. In einem letzten Verfahrensschritt 110 erfolgt dann die Identifizierung des Zustands des Werkzeugs, des Werkzeughalters, der Werkzeugmaschine und/oder des in der Werkzeugmaschine bearbeiteten Werkstücks anhand der zuvor ermittelten bzw. bereitgestellten Positionsänderungen und Geschwindigkeitsänderungen.

Grundsätzlich können für die Positionsänderungen und die Geschwindigkeitsänderungen zwischen unterschiedlichen Fällen je Maschinenachse und je Element unterschieden werden. Dabei ist erstmal nur zu ermitteln, in welche Richtungen sich das Element bewegt. Dies kann mit Hilfe der nachfolgenden Tabelle 1 ermittelt werden. Die Positionsänderungen und die Geschwindigkeitsänderungen stellen im Übrigen nichts anderes als die Quotienten der Rohdaten dar.

**Tabelle 1: Bedeutungen auf Basis der Quotienten**

| Fall | Bedeutung |
|---|---|
| $\Delta m_x < 1$ | Element verfährt in negative x-Richtung |
| $\Delta m_x = 1$ | Element verfährt auf konstantem x-Niveau |
| $\Delta m_x > 1$ | Element verfährt in positive x-Richtung |
| ... | ... |
| $\Delta m_z < 1$ | Element verfährt in negative z-Richtung |

(fortgesetzt)

| Fall | Bedeutung |
|---|---|
| $\Delta m_z = 1$ | Element verfährt auf konstantem z-Niveau |
| $\Delta m_z > 1$ | Element verfährt in positive z-Richtung |
| $\Delta v_{f,x} < 1$ | Vorschubgeschwindigkeit in x-Richtung sinkt |
| $\Delta v_{f,x} = 1$ | Vorschubgeschwindigkeit in x-Richtung ist konstant |
| $\Delta v_{f,x} > 1$ | Vorschubgeschwindigkeit in x-Richtung steigt |
| ... | ... |
| $\Delta v_{f,z} < 1$ | Vorschubgeschwindigkeit in z-Richtung sinkt |
| $\Delta v_{f,z} = 1$ | Vorschubgeschwindigkeit in z-Richtung ist konstant |
| $\Delta v_{f,z} > 1$ | Vorschubgeschwindigkeit in z-Richtung steigt |

Anschließend lässt sich anhand einer kombinierten Betrachtung zweier oder mehrere Fälle der Zustand, insbesondere der Betriebszustand der Werkzeugmaschine zum betrachteten Zeitpunkt der Serie von Zeitpunkten ermitteln.

Nachfolgend sind beispielhaft einige Bedingungen schematisch aufgelistet, anhand derer das Verfahren unterschiedliche Betriebszustände identifiziert kann.

a) Identifikation von Rückläufen:
Wird an einem Werkstück mehr als ein Zerspanprozess gefahren, so muss das Werkzeug zum Ausgangspunkt zurückgeführt werden. Zur Identifikation dieses Zustandes muss eine der drei unten aufgeführten Bedingungen erfüllt sein:

$$\Delta m_z > 1 \ \& \ \Delta m_x > 1$$

$$\Delta m_z = 1 \ \& \ \Delta m_x > 1$$

$$\Delta m_z > 1 \ \& \ \Delta m_x = 1$$

b) Identifikation von Stillstandszeiten und Leerläufen:
Für den Fall, dass die Werkzeugmaschine während des Bearbeitungsganges beispielsweise durch einen Benutzer händisch in den Leerlauf versetzt wird, sodass trotz sich drehender Hauptspindel keine Bearbeitung stattfindet, gilt die untenstehende Bedingung. Diese gilt ebenfalls für Stillstandszeiten bei einer stehender Hauptspindel

$$\Delta v_{f,x} = \Delta v_{f,z} = \Delta v_{f,y} = 0$$

c) Identifikation von Leerlauf bzw. Stillstand:
Eine Unterscheidung zwischen Leerlauf und Stillstand kann über die aus dem Steuerungssystem BE zusätzlich ausgelesene Spindeldrehzahl vorgenommen werden. Ist die Drehzahl der das Werkstück WS haltenden Einspannvorrichtung AV ungleich 0, so liegt Leerlauf vor.

d) Identifikation von Override-Befehlen:
Das Steuerungssystem BE der Werkzeugmaschine gibt manuell ausgeführte Override-Befehle zurück. Diese können ausgelesen und anschließend verarbeitet werden. Treffen die Bedingungen aus Figur 4 zu, so sind sie dem Zerspanprozess zugeordnet. Override-Befehle ändern die Bedingungen aus Figur 4 nicht. Es gilt zu beachten, dass je nach Befehl, die Bedingungen zur Identifikation von Stillstandszeiten und Leerläufen auch zutreffen können.

e) Identifikation des eigentlichen Zerspanprozesses und Ermittlung der individuellen Schnittsequenzen:
Zur Identifikation der individuellen Schnittsequenzen bei einer durchgehenden Bearbeitung ist im ersten Schritt das Signal der Vorschubgeschwindigkeiten der Achsen zu berücksichtigen. Um sicherzustellen, dass auch geringe Vorschubgeschwindigkeiten während der mechanischen Bearbeitung als solche identifiziert werden, besteht die Möglichkeit, die Werte zu quadrieren und anschließend auf die nächste natürliche Zahl, inkl. 0, zu runden.

Im nächsten Schritt werden die Positionsänderung sowie die Änderung der Vorschubgeschwindigkeit der jeweiligen Achsen mit hoher Genauigkeit bestimmt. Dies bewirkt, dass kleine Abweichungen identifiziert werden können. Anschließend gilt es eine weitere Fallunterscheidung durchzuführen, sodass die aktuell durchgeführte Schnittsequenz identifiziert werden kann. Die möglichen Fälle sowie die jeweiligen Bedingungen sind in der Figur 4 dargestellt. Die aufgestellten Bedingungen gelten auch für das Stechdrehen und eine Innenbearbeitung des Werkstücks.

Im in Figur 4 gezeigten Ausführungsbeispiel fährt beispielsweise der erste Werkzeughalter $WH_1$ aus seiner Ruheposition in negative z-Richtung. Das Verfahren ist mithilfe der angegebenen Quotienten in der Lage diesen Zustand zu erkennen. Dazu müssen alle in B1 genannten Bedingungen erfüllt sein:

$$\Delta v_{f,x} = 1$$
$$\Delta v_{f,x} = 1$$
$$\Delta m_x = 1$$
$$\Delta m_z < 1$$

Bei fortschreitender Zeit wird der Werkzeughalter $WH_1$ zusätzlich in positive-X-Richtung verfahren, sodass sämtliche Bedingungen B2 erfüllt sind. Mit erstmaligem Auftreten von Sensordaten, die den Bedingungen B4 genügen, erkennt das Verfahren den Beginn eines Zerspanprozesses: die Sequenz Anschnitt. Das Ende des Zerspanprozesses, die Sequenz Abschnitt, wird erkannt, wenn nicht mehr die Bedingungen B4 erfüllt sind, sondern die Bedingungen B5.

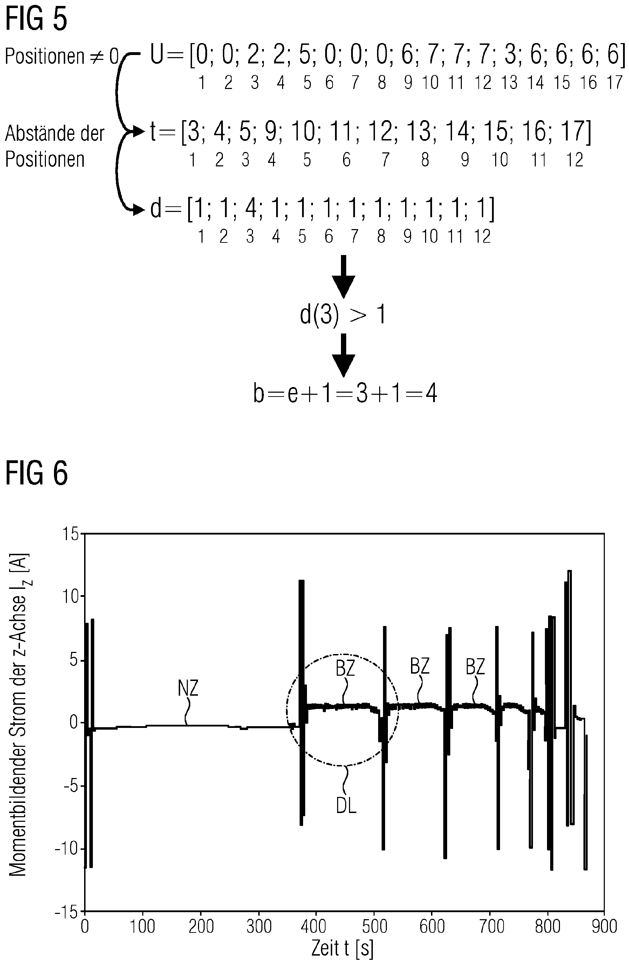

Zur Realisierung des erfindungsgemäßen Verfahrens werden die auf die jeweiligen Fälle zutreffenden Datenpunkte des Rohsignals für jedes Element für jede Maschinenachse jeweils in einer Matrix U, wie in Figur 5 für ein Element für eine Achse exemplarisch dargestellt, gespeichert. Im dargestellten Ausführungsbeispiel sind für siebzehn Zeitpunkte aus einer Serie von Zeitpunkten die zugehörigen siebzehn Quotienten dargestellt. Vorzugsweise handelt es sich bei den Quotienten um die Vorschubgeschwindigkeit in negativer z-Richtung.

Wenn nach einer Selektion von Betriebszuständen ausschließlich Zerspanprozesse weiter analysiert werden sollen, gilt es Werkzeugwechsel diese zu identifizieren und zu eliminieren, da für den Werkzeugwechsel einige dieser Bedingungen ebenfalls zutreffen könnten.

Das Erkennen eines Werkzeugwechsels kann im erfindungsgemäßen Verfahren durch eine Grenzwertbetrachtung erfolgen. Der Grenzwert ist als die Summe aus dem empirischen Mittelwert der in U gespeicherten Vorschubgeschwindigkeiten ($U_{v,f}(i)$) sowie einer Standardabweichung von 50 % definiert:

$$Lim_{v_f} = \frac{\sum_{i=1}^{n} U_{v,f}(i)}{n} \pm \frac{\sqrt{\frac{\sum_{i=1}^{n}(U_{v,f}(i) - \overline{U_{v,f}(i)})^2}{n-1}}}{2} \qquad (5)$$

Sobald ein in der Matrix U vorliegender Datenpunkt der Vorschubgeschwindigkeit diesen Grenzwert überschreitet, so ist dieser als zum Werkzeugwechsel zugehörig identifiziert und wird in der Matrix U zu null gesetzt. Die Indizes der Werte der Matrix U, die nicht als Werkzeugwechsel und somit als zum Zerspanprozess zugehörig erkannt werden, werden zur Selektion der Zerspanprozesse im nächsten Schritt in einen Vektor t geschrieben. Somit enthält der Vektor t lediglich diejenigen Zeitpunkte, in denen die Vorschubgeschwindigkeit in negativer z-Richtung ungleich 0 ist. Durch den Übertrag in den Vektor t können die Abstände (d) der einzelnen Messpunkte zueinander bestimmt werden:

$$d(i) = t(i+1) - t(i)\{i \in \mathbb{N} \mid 1 \leq i \leq n-1\} \qquad (6)$$

Dies bestimmt die in d gespeicherten Werte. Für ein zusammenhängendes Messsignal ist d = 1. Daher kann durch die Bedingung b = e + 1 der Startwert (b) des Folge-Zerspannprozesses und Endwert (e) des aktuellen Zerspannprozesses jedes individuellen Zerspanprozesses ermittelt werden, welche in der gezeigten Matrix U als solche nicht unmittelbar identifizierbar sind.

Zudem besteht die Möglichkeit, die zeitlichen Verläufe der Positionsänderung und Geschwindigkeitsänderung auch quantitativ zu bewerten und daraus Rückschlüsse über den Betriebszustand für frei wählbare oder auch vorbestimmte Zeitbereiche zu ziehen. So können beispielsweise pulsierende Variationen der Geschwindigkeitsänderungen innerhalb eines betrachteten Zeitbereichs auf einen Regenerativeffekt hindeuten. Mithilfe des Verfahrens ist es auch möglich, Unterschiede in den Geschwindigkeitsänderungen zu erkennen, die während des gleichen Bearbeitungsschritts zweier jedoch nacheinander gefertigter, identischer Werkstücke auftreten. Hieraus können sich Hinweise auf den Verschleiß des währenddessen eingesetzten Werkzeugs ergeben.

Darüber hinaus besteht die Möglichkeit in einem weiteren Verfahrensschritt 106 (Figur 3) weitere interne Maschinensignale, insbesondere elektrische Strom- und Spannungssignale für die Antriebsmotoren der Werkzeugmaschine zu erfassen. Hierzu zeigt Figur 6 den momentbildenden Strom für den für eine Verstellung entlang der z-Achse verantwortlichen Antriebsmotor für den gesamten Bearbeitungsprozess des Werkstücks. Diese umfassen die einzelnen Bearbeitungszeiten BZ sowie die anfallenden Nebenzeiten NZ.

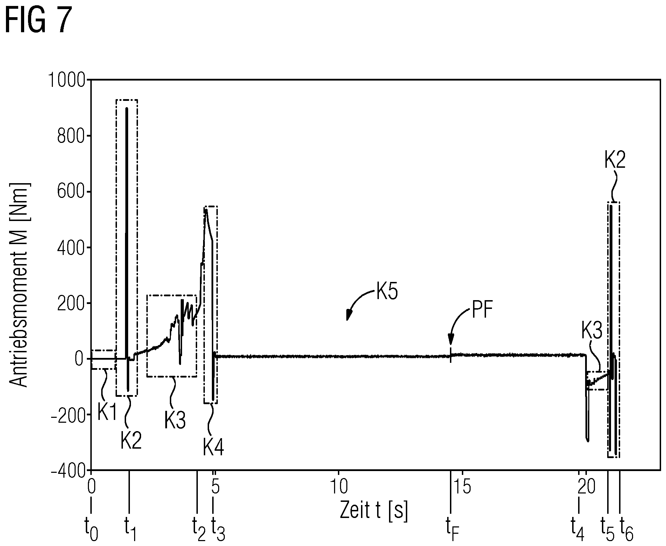

Figur 7 zeigt den Ausschnitt DL aus dem Diagramm gemäß Figur 6 in einer höheren Zeitauflösung. Der Stromverlauf zum Antrieb der Hauptspindel ist über die Zeit dargestellt und lässt sich chronologisch in mehrere Zeitabschnitte unterteilen. Während eines ersten Zeitabschnitts K1 zwischen Zeitpunkt $t_0$ bis zum Zeitpunkt $t_1$ ist der Antrieb im Stillstand. Anschließend tritt ein nadelförmiger Stromimpuls zum Zeitpunkt $t_1$ als Zeitabschnitt K2 auf, an dem sich ein Zeitabschnitt K3 für die Antriebsregelung des Motors anschließt, währenddessen die Hauptspindel an die programmierte Position verfahren wird. Zum Zeitpunkt $t_2$ dort angekommen beginnt der Zeitabschnitt K4, in dem das Werkzeug WZ das Werkstück WS erreicht und einen Kontakt herstellt. Dies ist die Sequenz Anschnitt. Auch der Zeitabschnitt K4 ist vergleichsweise kurz und endet zum Zeitpunkt $t_3$, an sich der Zeitabschnitt K5 für die Hauptbearbeitung des Werkstücks, d.h. der Zerspanprozess anschließt. Sie endet zu Zeitpunkt $t_4$. Sodann erfolgt erneut eine zweite Antriebsregelung K3 zwischen den Zeitpunkten $t_4$ und $t_5$ und ein zweiter Beschleunigungseffekt K2 zwischen $t_5$ und $t_6$.

Somit kann in einem weiteren Verfahrensschritt 106 (Figur 3) derartige Maschinensignale erfasst bzw. bereitgestellt und bei der Identifikation des Zustands im Verfahrensschritt 110 berücksichtigt werden. Dies eröffnet die Möglichkeit, unrentable Prozesszustände, wie beispielsweise Stillstandszeiten, Leerläufe, Werkzeugwechsel, Eilgänge oder besagte Override-Befehle zu identifizieren. Insbesondere die Berücksichtigung der weiteren Maschinensignale ermöglicht es, fehlerhafte Zustände zu erkennen, wenn beispielsweise eine nicht erwartete Änderung im Stromfluss (Figur 7, Pfeil PF) auftritt. Hierdurch lässt sich der Fertigungsprozess bedarfsgerecht anpassen.

Insgesamt können aus dem durchgängigen Fertigungsprozess die einzelnen Zerspanprozesse erkannt und ermittelt werden. Zudem stellt das Verfahren eine einfache sowie kostengünstige Methode zur online/offline Prozessüberwachung während des gesamten Fertigungsprozesses dar.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

**Patentansprüche**

1. Verfahren (100) zur offline und/oder online Identifikation eines Zustandes einer Werkzeugmaschine (WM), zumindest eines ihrer Werkzeuge (WZ) oder zumindest eines darin bearbeiteten Werkstücks (WS),
   bei der die Werkzeugmaschine (WM)
   zumindest eine vorzugsweise drehbare Einspannvorrichtung (AV) zum Einspannen eines zu bearbeitenden Werkstücks (WS) und zumindest einen verfahrbaren Werkzeughalter (WH$_1$, WH$_2$) zum Positionieren eines darin gehaltenen Werkzeugs (WZ), mit dem das Werkstück (WS) bearbeitet werden kann, und
   Sensoren aufweist, mit denen zumindest die Position des Werkzeugs und/oder des Werkzeughalters orts- und zeitaufgelöst erfassbar ist, umfassend die Schritte:

   a) zu einer Serie von Zeitpunkten i, i=l...n Erfassen oder Bereitstellen (102) von Positionen P des Werkzeugs und/oder des Werkzeughalters (WH$_1$, WH$_2$),
   b) Ermitteln (104) für die Serie von Zeitpunkten i b1) eine Serie von Positionsänderungen $\Delta m_i$ des Werkzeugs (WM), des Werkzeughalters (WH$_1$, WH$_2$) bzw. der Einspannvorrichtung (AV)
   gemäß

$$\Delta m_i = \frac{P_i}{P_{i-1}}$$

   und b2) eine Serie von Geschwindigkeitsänderungen $\Delta v_i$ des Werkzeugs (WM), des Werkzeughalters (WH$_1$, WH$_2$) bzw. der Einspannvorrichtung (AV) gemäß

$$\Delta v_i = \frac{v_i}{v_{i-1}}$$

mit

$$v_i = \frac{P_i - P_{i-1}}{t_i - t_{i-1}} \quad \text{und} \quad v_{i-1} = \frac{P_{i-1} - P_{i-2}}{t_{i-1} - t_{i-2}}$$

c) Identifizieren (110) des Zustands

    c1) des Werkzeugs (WZ),
    c2) des Werkzeughalters (WH$_1$, WH$_2$),
    c3) der Werkzeugmaschine (WM) und/oder
    c4) des in der Werkzeugmaschine (WM) bearbeiteten Werkstücks (WS) anhand der Positionsänderungen $\Delta m_i$ und der Geschwindigkeitsänderungen $\Delta v_i$.

2. Verfahren (100) nach Anspruch 1,
   bei dem die Positionen P als Koordinaten $P_i$ ($x_i$, $y_i$, $z_i$) eines kartesischen Koordinatensystems (KS) vorliegen und entsprechend der Achsen x, y, z des Koordinatensystems (KS)
   für die Positionsänderungen $\Delta m_i$ ihre jeweiligen Komponenten $\Delta m_{xi}$, $\Delta m_{yi}$, $\Delta m_{zi}$ und
   für die Geschwindigkeitsänderungen $\Delta v_i$ ihre jeweiligen Komponenten $\Delta v_{xi}$, $\Delta v_{yi}$, $\Delta v_{zi}$
   bestimmt werden.

3. Verfahren (100) nach Anspruch 2,
   bei dem der identifizierte Zustand ein Betriebszustand ist, der

       d) eine Bewegung des Werkzeugs bzw. Werkzeughalters, insbesondere

           d1) zur Werkstückbearbeitung, insbesondere Schnittsequenzen,
           d2) zur Werkzeugneupositionierung, insbesondere Rückläufern,
           d3) zum Werkzeugwechsel,

       e) eine Ruhephase des Werkzeugs bzw. Werkzeughalters, insbesondere

           e1) eine Stillstandzeit und/oder
           e2) einen Leerlauf

   repräsentiert und/oder
   f) eine Abweichung von einer vorgegebenen Bewegungsgeschwindigkeit der Einspannvorrichtung, insbesondere Override-Befehlen,

   darstellt

4. Verfahren (100) nach einem der vorherigen Ansprüche, bei dem weitere Sensoren elektrische Parameter von Antriebsmotoren der Werkzeugmaschine erfassen.

5. Verfahren (100) nach einem der vorherigen Ansprüche, bei dem weitere Daten, insbesondere Korrekturfaktoren oder Werkzeugparameter, zur Ermittlung der Zustände vorab bereitgestellt bzw. ermittelt und während der Identifizierung verwendet werden.

6. Verfahren (100) nach einem der vorherigen Ansprüche,
   bei dem die Serie der Positionsänderungen $\Delta m_i$ und/oder der Geschwindigkeitsänderungen $\Delta v_i$ anhand einer Grenzwertbetrachtung analysiert werden.

7. Verfahren (100) nach einem der vorherigen Ansprüche,
   bei dem die Identifizierung des Zustands anhand von Fallunterscheidungen getroffen werden, bei denen geprüft wird, ob der betreffende Wert für die Positionsänderung $\Delta m_i$ und/oder die Geschwindigkeitsänderung $\Delta v_i$, oder, sofern von Anspruch 2 abhängig, eine ihrer Komponenten kleiner 1, gleich 1, größer 1 oder 0 ist bzw. sind.

8. Verfahren (100) nach einem der vorherigen Ansprüche,

bei dem die Serie der Positionsänderungen $\Delta m_i$ und/oder der Geschwindigkeitsänderung $\Delta v_i$ in einem Diagramm als Kennlinien dargestellt oder in einem Daten-Array bereitgestellt werden und anhand dessen eine Analyse des jeweiligen Zustands erfolgt.

9. Verfahren (100) nach einem der vorherigen Ansprüche, verwendet

   g) zur Erkennung einer Überlastung eines der Antriebe der Werkzeugmaschine,
   h) zur Erkennung von Verschleiß an der Werkzeugmaschine bzw. am Werkzeug,
   i) zur Erkennung eines Herstellungs- oder Werkstück-Fehlers und/oder
   j) zur Erkennung von Prozessinstabilitäten, insbesondere von Rattern (Regenerativeffekt).

10. Verfahren (100) nach einem der vorherigen Ansprüche, welches computer-implementiert ist.

11. Vorrichtung, insbesondere ein Steuerungssystem (BE), zur Datenverarbeitung, umfassend Mittel zur Ausführung des Verfahrens nach einem der Ansprüche 1 bis 10.

12. Computerprogrammprodukt, umfassend Befehle, die bei der Ausführung des Programms durch einen Computer diesen veranlassen, die Schritte des Verfahrens nach einem der Ansprüche 1 bis 10 auszuführen

13. Computerlesbares Medium, umfassend Befehle, die bei der Ausführung durch einen Computer diesen veranlassen, die Schritte des Verfahrens nach einem der Ansprüche 1 bis 10 auszuführen

# FIG 1

# FIG 2

# FIG 3

100

102

106

104

110

# FIG 4

| B7 | B6 | B5 | | B4 | B3 | B2 | B1 |

B7:
$\Delta V_{f,x} < 1$
$\Delta V_{f,z} > 1$
$\Delta m_x < 1$
$\Delta m_z < 1$

B6:
$\Delta V_{f,x} = 1$
$\Delta V_{f,z} = 1$
$\Delta m_x < 1$
$\Delta m_z < 1$

B5:
$\Delta V_{f,x} > 1$
$\Delta V_{f,z} < 1$
$\Delta m_x < 1$
$\Delta m_z < 1$

B4:
$\Delta V_{f,x} < 1$
$\Delta V_{f,z} > 1$
$\Delta m_x > 1$
$\Delta m_z > 1$

B3:
$\Delta V_{f,x} = 1$
$\Delta V_{f,z} = 1$
$\Delta m_x > 1$
$\Delta m_z < 1$

B2:
$\Delta V_{f,x} > 1$
$\Delta V_{f,z} < 1$
$\Delta m_x > 1$
$\Delta m_z < 1$

B1:
$\Delta V_{f,x} = 1$
$\Delta V_{f,z} = 1$
$\Delta m_x = 1$
$\Delta m_z < 1$

K5

X

Z

## FIG 5

Positionen ≠ 0

$U = [0;\ 0;\ 2;\ 2;\ 5;\ 0;\ 0;\ 0;\ 6;\ 7;\ 7;\ 7;\ 3;\ 6;\ 6;\ 6;\ 6]$

1  2  3  4  5  6  7  8  9  10  11  12  13  14  15  16  17

Abstände der Positionen

$t = [3;\ 4;\ 5;\ 9;\ 10;\ 11;\ 12;\ 13;\ 14;\ 15;\ 16;\ 17]$

1  2  3  4  5  6  7  8  9  10  11  12

$d = [1;\ 1;\ 4;\ 1;\ 1;\ 1;\ 1;\ 1;\ 1;\ 1;\ 1;\ 1]$

1  2  3  4  5  6  7  8  9  10  11  12

$d(3) > 1$

$b = e + 1 = 3 + 1 = 4$

## FIG 6

FIG 7

**Europäisches Patentamt**
**European Patent Office**
**Office européen des brevets**

# EUROPÄISCHER RECHERCHENBERICHT

**Nummer der Anmeldung**

EP 20 19 8969

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHU LIDA ET AL: "Recent progress of chatter prediction, detection and suppression in milling", MECHANICAL SYSTEMS AND SIGNAL PROCESSING, ELSEVIER, AMSTERDAM, NL, Bd. 143, 31. März 2020 (2020-03-31), XP086151299, ISSN: 0888-3270, DOI: 10.1016/J.YMSSP.2020.106840 [gefunden am 2020-03-31] * das ganze Dokument * | 1-13 | INV. G05B19/4065 ADD. B23Q17/00 |
| X | GUILLEM QUINTANA ET AL: "Using kernel data in machine tools for the indirect evaluation of surface roughness in vertical milling operations", ROBOTICS AND COMPUTER INTEGRATED MANUFACTURING, ELSEVIER SCIENCE PUBLISHERS BV., BARKING, GB, Bd. 27, Nr. 6, 24. Mai 2011 (2011-05-24), Seiten 1011-1018, XP028234861, ISSN: 0736-5845, DOI: 10.1016/J.RCIM.2011.05.005 [gefunden am 2011-05-31] * das ganze Dokument * | 1-13 | |
| A | DE 10 2007 048961 A1 (DAIMLER AG [DE]; MTU AERO ENGINES GMBH [DE]) 16. April 2009 (2009-04-16) * das ganze Dokument * | 1-13 | RECHERCHIERTE SACHGEBIETE (IPC) B23Q G05B |
| A | WO 2006/037137 A1 (KEBA AG [AT]; SCHWEINZER HERBERT [AT]; KRAMMER PETER [AT]) 13. April 2006 (2006-04-13) * das ganze Dokument * | 1-13 | |
| A,D | EP 3 614 220 A1 (SIEMENS AG [DE]) 26. Februar 2020 (2020-02-26) * das ganze Dokument * | 1-13 | |

Der vorliegende Recherchenbericht wurde für alle Patentansprüche erstellt

| Recherchenort | Abschlußdatum der Recherche | Prüfer |
|---|---|---|
| München | 10. März 2021 | Fraïssé, Stéphane |

**ANHANG ZUM EUROPÄISCHEN RECHERCHENBERICHT
ÜBER DIE EUROPÄISCHE PATENTANMELDUNG NR.**

EP 20 19 8969

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-03-2021

| Im Recherchenbericht angeführtes Patentdokument | Datum der Veröffentlichung | Mitglied(er) der Patentfamilie | Datum der Veröffentlichung |
|---|---|---|---|
| DE 102007048961 A1 | 16-04-2009 | KEINE | |
| WO 2006037137 A1 | 13-04-2006 | AT 502931 A2<br>WO 2006037137 A1 | 15-06-2007<br>13-04-2006 |
| EP 3614220 A1 | 26-02-2020 | EP 3614220 A1<br>WO 2020038815 A1 | 26-02-2020<br>27-02-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020038815 A1